# EUROPÄISCHE PATENTANMELDUNG

(11) **EP 1 912 158 A2**
(43) Veröffentlichungstag der Anmeldung: **16.04.2008**
(21) Anmeldenummer: 07118287.7
(22) Anmeldetag: 11.10.2007
(51) Int. Cl.: G06K 9/00

(54) **Verfahren und Vorrichtung zum Bestimmen der Veränderung der Form eines dreidimensionalen Objektes**

(30) Priorität: 13.10.2006 DE 102006048578
(71) Anmelder: Witte, Gerhard, 40764 Langenfeld (DE)
(72) Erfinder: Witte, Gerhard, 40764 Langenfeld (DE)
(74) Vertreter: Schwabe - Sandmair - Marx

(57) **Zusammenfassung**

Die Erfindung betrifft ein Verfahren zum Bestimmen der Veränderung der Form eines dreidimensionalen Objektes aus mindestens einer zweidimensionalen Abbildung des Objektes, wobei die ursprüngliche dreidimensionale Form des Objektes als dreidimensionale Modellform bekannt ist oder aus der mindestens einen zweidimensionalen Abbildung des Objektes ermittelt wird und die dreidimensionale Modellform so gedreht wird, dass mindestens eine zweidimensionale Abbildung oder Projektion der dreidimensionalen Modellform zumindest mit einem Teilbereich oder einer Kontur der mindestens einen zweidimensionalen Abbildung des Objektes übereinstimmt oder dieser ähnelt und wobei ermittelt wird, in welchem Bereich oder welchen Bereichen die mindestens eine zweidimensionale Abbildung des Objektes von der oder den zweidimensionalen Projektion(en) der dreidimensionalen Modellform abweicht, wobei der oder die abweichenden zweidimensionalen Bereiche als formveränderte Bereiche identifiziert werden und nach einer Rückprojektion des oder der formveränderten Bereiche auf die dreidimensionale Modellform die dreidimensionale Formveränderung des dreidimensionalen Objektes ermittelt wird.

## Beschreibung

Die vorliegende Erfindung bezieht sich auf ein Verfahren und eine Vorrichtung zum Bestimmen der Veränderung der Form oder auch des Wertes eines dreidimensionalen Objektes, insbesondere eines Kraftfahrzeuges, welches zum Beispiel durch einen Unfall zum Teil verformt wurde und beispielsweise eine Delle oder eine eingedrückte Frontpartie aufweist.

Werden Gegenstände ausgehend von ihrem ursprünglichen oder als neu anzusehenden Zustand zum Beispiel durch eine externe Krafteinwirkung verformt, so dass zum Beispiel nach einem Steinschlag eine Delle in einer Autotür vorhanden ist oder durch Eindrücken eines Kofferraumdeckels dieser zusammengeschoben ist, so werden diese verformten Bereiche als schadhaft angesehen, was die Zahlungspflicht einer Versicherung zur Folge haben kann. Da solche Verformungen an unterschiedlichen Bereichen mit unterschiedlichen Ausmaßen auftreten können, ist es erforderlich, diese Verformung zu erfassen und wenn möglich zu Quantifizieren, um zum Beispiel den Wertverlust durch diese Verformung zu ermitteln.

Zur Beurteilung der Schadenhöhe an einem unfallbeschädigten Fahrzeug gibt es Schadenkalkulationssysteme, mit deren Hilfe die voraussichtlichen Reparaturkosten bestimmt werden können. Diese Systeme basieren darauf, dass ein Kfz-Sachverständiger oder Sachkundiger die beschädigten Bauteile visuell identifiziert, je nach schwere der Beschädigung festlegt, ob diese Bauteile erneuert oder instand gesetzt werden können und anschließend diese Informationen auf ein EDV-System überträgt. In diesem EDV-System sind die Ersatzteilpreise und die jeweils notwendigen Arbeiten zum Austausch dieser Teile hinterlegt. Diese Systeme verfügen auch über eine Reparaturlogik für den Fall, dass es sich nicht nur um ein Bauteil handelt, sondern mehrere miteinander verbundene Bauteile ausgewechselt werden müssen. Anschließend identifiziert dieses Programm auch an Hand der zu erneuernden bzw. instand zu setzenden Ersatzteile die Höhe der Reparaturkosten. Solche Verfahren werden von den Firmen Audatex und DAT in Deutschland seit Jahrzehnten angeboten.

Aus der JP 2001250009 ist es bekannt, in einem Speicher eine Indextabelle abzulegen, in welcher ein Komponentenname und ein Arbeitsvorgang bezeichnet werden, um Reparaturkosten für ein Fahrzeug abzuschätzen.

Die JP 2001338090 offenbart ein System mit unterschiedlichen Anzeige-Modi, um in Abhängigkeit von der Erfahrung eines Benutzers die Reparaturkosten eines Fahrzeuges abzuschätzen.

Aus der JP 2002329101 ist ein System zum Schätzen der Kosten einer Kraftfahrzeugreparatur bekannt, wobei ein Speicher für Ersatzteile mit zugehörigen Ersatzteilpreisen vorgesehen ist.

Aus der US 4,435,769 und der korrespondierenden DE 31 10 788 A1 ist ein Gerät für die Erstellung von Kostenvoranschlägen für Reparaturen an Automobilen bekannt, wobei eine Teiledatei zur Speicherung von Ersatzteildaten vorgesehen ist.

Aus der EP 1 603 054 A1 ist ein Verfahren und eine Vorrichtung zum Bestimmen von charakteristischen Eigenschaften eines Kraftfahrzeuges bekannt, wobei eine Datenbank bereitgestellt wird, in der für eine Vielzahl von Gruppen von jeweils typgleichen Kraftfahrzeugen charakteristische Eigenschaften hinterlegt sind. Die charakteristischen Eigenschaften des Kraftfahrzeuges werden mit Hilfe eines Kraftfahrzeug-Identifikationsschlüssel aus der Datenbank abgefragt.

Es ist eine Aufgabe der vorliegenden Erfindung ein Verfahren und eine Vorrichtung zum einfachen Bestimmen der Veränderung der Form eines dreidimensionalen Objektes aus mindestens einer zweidimensionalen Abbildung des Objektes vorzuschlagen.

Diese Aufgabe wird durch die Gegenstände der unabhängigen Ansprüche gelöst. Vorteilhafte Ausführungsformen ergeben sich aus den abhängigen Ansprüchen.

Bei einem erfindungsgemäßen Verfahren zum Bestimmen der Veränderung der Form eines dreidimensionalen Objektes, wie zum Beispiel eines Unfall-Kraftfahrzeuges, wird mindestens eine zweidimensionale Abbildung des Objektes zum Beispiel durch eine oder mehrere fotografische Aufnahmen am Unfallort erzeugt. Diese mindestens eine zweidimensionale Abbildung oder Aufnahme des Objektes wird zum Beispiel mittels eines Mobiltelefons als MMS, über Internet oder andere Übertragungsverfahren an eine Recheneinheit übertragen, welche sich auch am Unfallort selbst befinden kann. Die ursprüngliche unverformte dreidimensionale Form des auf der zweidimensionalen Abbildung verformten Objektes kann zum Beispiel in einer Datenbank der Recheneinheit abgelegt sein oder kann auch aus der zweidimensionalen Abbildung des Objektes rekonstruiert werden. Beispielsweise kann der Typ des Unfall-Kraftfahrzeuges in die Recheneinheit eingegeben oder aus der zweidimensionalen Abbildung zum Beispiel anhand eines Logos oder einer charakteristischen Karosserieform ermittelt werden, so dass die ursprüngliche und nicht verformte dreidimensionale Modellform des Objektes aus einer Datenbank, in welcher beispielsweise die Geometrie und Abmessungen aller gängigen Kraftfahrzeugsmodelle gespeichert sind, in die Recheneinheit geladen werden können, Alternativ ist es auch möglich, dass aus einer oder mehreren zweidimensionalen Abbildungen des verformten Objektes durch Schätzungen unter Zugrundelegung bekannter oder üblicher Abmessungen des Objektes oder Automobils ermittelt wird, wie die dreidimensionale nicht verformte Form des Objektes gewesen sein müsste. Dabei können Konturen und Schattenbildung herausgearbeitet werden, um praktisch nur anhand des Linienformverlaufs die Abweichung der Linien und somit die Verformung zu ermitteln. Die aus einer Datenbank hochgeladene oder durch Schätzung ermittelte dreidimensionale Modellform des Objektes wird anschließend in der Recheneinheit relativ zu der oder den Aufnahmen des verformten Objektes so gedreht und/oder verschoben, dass die Projektion der dreidimensionalen Modellform auf die tatsächlich aufgenommene mindestens eine zweidimensionale Abbildung des Objektes möglichst gut mit dieser übereinstimmt oder dieser ähnelt. Verfahren zum Vergleichen zweier zweidimensionaler Abbildungen oder Konturen von Objekten sind im Stand der Technik bekannt und werden häufiger auch als "Matching"-Verfahren bezeichnet.

Anschließend kann nach einer Rückprojektion der aufgenommenen zweidimensionalen Abbildung(en) des verformten Objektes auf die relativ zu der oder den Abbildungen ausgerichtete dreidimensionale Modellform ermittelt werden, in welchem Bereich oder welchen Bereichen die aus den Rückprojektionen der zweidimensionalen Abbildungen des Objektes gewonnene dreidimensionale Form des verformten Objektes von der dreidimensionalen Modellform abweicht.

Bei dem erfindungsgemäßen Verfahren können auch Methoden der Fotogrammetrie verwendet werden, um aus den Aufnahmen des verformten Objekts eine dreidimensionale Form zu rekonstruieren, welche mit einer unverformten Modellform zur Ermittlung der Lage und Größe der vorliegenden Verformung(en) verglichen werden kann.

Ebenso ist es auch möglich, dass ermittelt wird, in welchem Bereich oder welchen Bereichen die zweidimensionale Abbildung des verformten Objektes von der zweidimensionalen Projektion der unverformten dreidimensionalen Modellform abweicht.

Aus den Vergleichen der unverformten Modellform mit den Abbildungen des verformten Objekts wird die Information erhalten, in welchem Bereich des unverformten dreidimensionalen Objektes farmveränderte Bereiche vorliegen, welche auf der zweidimensionalen Abbildung des dreidimensional verformten Objektes erkennbar sind.

Alternativ oder ergänzend ist es auch möglich die Aufnahme(n) des verformten Objektes mit zum Beispiel in einer Datenbank gespeicherten Modellen oder Referenzaufnalunen, welche Referenzverformungen des Objektes beinhalten, zu vergleichen, um zu ermitteln, ob eine oder mehrere der Referenzverformungen vorliegen.

Somit kann für den Fall, dass von einem verformten dreidimensionalen Objekt, wie zum Beispiel einem beschädigten Fahrzeug, lediglich ein Lichtbild vorliegt, auch ohne Hinzuziehung eines Fachmannes anband des vorliegenden Lichtbildes der Schadenumfang abgeschätzt weiden und kann anschließend auf eines der oben beschriebenen Schadenkalkulationssysteme übertragen werden.

Vorzugsweise werden Kraftfahrzeuge oder Automobilteile, wie zum Beispiel die Karosserie, mit dem oben beschriebenen Verfahren auf Verformungen untersucht, wobei das Verfahren auch bei anderen Objekten anwendbar ist.

Es ist auch möglich, dass die Verformung eines dreidimensionalen Objektes anhand des auf einer Aufnahme erkennbaren Lichteinfalls oder der Schattengebung detektiert oder ermittelt wird. Beispielsweise kann auf einem Foto einer eingebeulten und im Ausgangszustand fast oder vollständig ebenen Fläche, wie zum Beispiel der Außenseite einer Fallrzeugtür, anhand des auf einer Fotografie erkennbaren Unterschiedes der Helligkeit im Bereich der Verformung ermittelt werden, dass eine Verformung vorliegt. Ebenso ist es möglich, auch das Ausmaß der Verformung zu bestimmen, wenn Referenzgrößen auf der fotografischen Abbildung enthalten sind, wie zum Beispiel ein Türgriff, dessen Abmessungen bekannt sind, oder der Verlauf einer Kante oder eines anderen markanten Elementes, welches zum Beispiel in einer Datenbank hinterlegte bekannte Abmessungen aufweist.

Gemäß einem weiteren Aspekt bezieht sich die Erfindung auf ein Verfahren zum Bestimmen des Schadens oder der Schadenshöhe eines Kraftfahrzeuges, wobei die Formveränderung des Kraftfahrzeuges mit einem wie oben beschriebenen Verfahren ermittelt werden kann. Anschließend kann, gemäß einem ersten Aspekt, wie oben beschrieben, durch einen Vergleich mit einem Referenz-Schadensmodell, wie zum Beispiel durch einen Vergleich mit einem bereits untersuchten und bezüglich der Schadenshöhe quantifizierten Kraftfahrzeugmodell gleichen Typs mit einer Beschädigung im gleichen oder etwa im gleichen Bereich, ermittelt werden, wie hoch der Schaden des auf der oder den Abbildungen erkennbaren Fahrzeugs ist.

Bei einem zweidimensionalen Bild sind die außen liegenden beschädigten Teile im Regelfall sehr gut zu identifizieren und ein Kfz-Sachverständiger weiß im Regelfall, welche innen liegenden Teile bei einer vorliegenden Deformation mit hoher Wahrscheinlichkeit ebenfalls beschädigt sind. Wenn ein zweidimensionales Bild mit außen liegenden Schäden vorliegt und dies mit einem unfallbeschädigten Fahrzeug baugleichen Typs verglichen wird, können anhand von Schattierungen, nicht mehr sauber verlaufenden Kannten oder Abständen je nach Unfallschwere durch Vergleiche mit realen weiteren Unfällen (Referenzschäden), deren Schadenhöhe auf konventionelle Art ermittelt worden ist, die Unfälle geeicht werden. Da die Aufnahmehöhe, der Abstand von der Kamera zum Objekt und die Brennweite des Objektives regelmäßig nicht bekannt sind, um hier beispielsweise eine Referenzfotoliste zu erzeugen, kann erfindungsgemäß ein dreidimensionales Fahrzeug mittels eines Programms solange gedreht und in der Perspektive verändert werden, dass es mit möglichst vielen Kannten bzw. Konturen oder Anbauten am Fahrzeug exakt übereinstimmt. Wenn dieses dreidimensionale Bild praktisch hinter das zweidimensionale Foto des unfallbeschädigten Fahrzeuges gelegt wird, lassen sich dann durch Abweichungen an den Konturen beispielsweise am vorderen Radlauf, Motorhaubenvorderkante oder Türkanten bzw. Auswerten von Schatten oder Verlauf von Zierleisten rechnerisch Abweichungen zu dem dreidimensionalen Referenzauto ermitteln.

Aus diesen Abweichungen kann beispielsweise im einfachen Fall durch Messen von vergleichbaren Beschädigungen, bei denen konventionell nach obigem Verfahren kalkuliert wurde und die Schadenhöhe bekannt ist, der zur Schadenbeseitigung notwendige Reparaturkostenaufwand ermittelt werden. Die Wahrscheinlichkeit, dass ein ähnlich beschädigtes Fahrzeug vorliegt, ist sehr hoch, da aus der konventionellen Prüfung von Kfz-Unfallschäden eine große Menge zur Eichung heranzuziehender Bilder und eventuell korrespondierender Schadenhöhen zur Verfügung stehen und verwendet werden können. Diese lassen sich durch Neutralisieren der Stundenverrechnungssätze und Ersatzteilpreise so einsetzen, dass unabhängig von Preiserhöhungen beim Stundenverrechnungssatz oder bei Ersatzteilen die Vergleichsfahrzeuge herangezogen werden können, wobei im Fall der Feststellung eines Schadens, der eine bestimmte Zahl an Arbeitsstunden und/oder Ersatzteile erforderlich macht, die jeweils gültigen Preislisten herangezogen werden können, um den Gesamtschaden zu berechnen.

Es ist auch möglich, mit dem beschriebenen Verfahren bei Vorliegen einer konventionellen Schadenermittlung beispielsweise nach DAT oder Audatex anhand der Identifizierung von Ersatzteilen, notwendigem Instandsetzungs- und Lackieraufwand Rückschlüsse auf die Ursprungsform des Fahrzeuges zu treffen.

Die zu erwartende Linienführung kann bei einem bestimmten Beschädigungsgrad nachgebildet werden und somit kann aus dem 2D-Bild ein Bild mit dem zu erwartenden Beschädigungsumfang erzeugt werden. Wenn die Anzahl der vorliegenden Fälle groß genug ist, kann mit hinreichender Genauigkeit, wie beispielsweise bei einer Crashsimulation, aus dem vorhandenen Schaden ein zuordenbares Lichtbild zu erzeugen sein.

Alternativ kann gemäß einem weiteren Aspekt die Schadenshöhe des Kraftfahrzeuges dadurch bestimmt werden, dass das Kraftfahrzeug oder allgemein das verformte Modell in verschiedene Bereiche eingeteilt wird, denen eine unterschiedliche Gewichtung bezüglich der Schadensbemessung kontinuierlich oder diskret zugeordnet ist. Beispielsweise kann bei einem Kraftfahrzeug-Madell festgelegt werden, dass ein Schaden im Frontbereich mit einer Größe X pro beschädigter Flächeneinheit zu bewerten ist, wobei ein Schaden in einem anderen Bereich, wie zum Beispiel dem Kotflügel oder der Karosserie, mit Y oder Z pro beschädigter Flächeneinheit zu bewerten ist.

Vorzugsweise können zur Bestimmung der Schadenshöhe bei einem Vergleich mit einem bereits früher ausgewerteten Referenz-Schadensmodell die Stundensätze von Kfz-Sachverständigen herausgerechnet werden, welche bei der Schadensbestimmung nicht mehr berücksichtigt werden müssen. Des weiteren ist es vorteilhaft, wenn bei einem Referenz-Schaden angegeben ist, welche Bauteile beschädigt oder defekt sind, wobei anschließend zum Beispiel durch Verknüpfung mit einer Bauteile-Preisliste der konkrete aktuell zu beziffernde Schaden ermittelt werden kann. Somit können auch Preisveränderungen bei zu ersetzenden Bauteilen bereits bei der Schadensbestimmung berücksichtigt werden.

Weiterhin bezieht sich die Erfindung auf ein Computerprogramm, welches, wenn es in einen Computer geladen ist oder auf einem Computer läuft, ein oder mehrere der oben beschriebenen Verfahrensschritte ausführt. Des weiteren bezieht sich die Erfindung auf ein Programmspeichermedium oder Computerprogrammprodukt mit einem solchen Programm.

Gemäß einem weiteren Aspekt bezieht sich die Erfindung auf eine Vorrichtung zum Bestimmen der Veränderung der Form eines dreidimensionalen Objektes mit einer Datenbank, in welcher Referenzdaten von dreidimensionalen Formen einer Objektklasse, wie zum Beispiel eines Automobils, als Modellform abgespeichert sind und optional auch Daten abgespeichert sein können, welche Bereiche der jeweils abgespeicherten dreidimensionalen Modelle bezüglich der zu bewertenden Schadenshöhe in einem solchen Bereich klassifizieren können. Optional können auch Referenz-Schäden für die jeweils abgespeicherten dreidimensionalen Modelle abgespeichert sein, welche beispielsweise Beschädigungen unterschiedlicher Größe oder Intensität an unterschiedlichen Objektbereichen aufweisen und welche optional je nach tatsächlich vorliegender Beschädigung auch miteinander kombiniert und mit einer Aufnahme eines beschädigten Objektes verglichen werden können. Weiterhin ist es möglich, dass in der Datenbank auch Preislisten für Ersatzteile abgelegt sind.

Diese Datenbank ist mit einer Recheneinheit verbunden, in welche mindestens eine und bevorzugt zwei oder mehr zweidimensionale Abbildungen oder Fotografien des verformten oder beschädigten Objektes, also zum Beispiel eines Unfall-Autos, eingegeben werden. Die Dateneingabe kann zum Beispiel durch Eingabe eines Datenträgers, wie zum Beispiel einer Speicherkarte, CD oder DVD, oder durch Übertragung über ein Netz, wie zum Beispiel Mobilfunk, Festnetz oder Internet erfolgen. Die so eingegebenen Bilddaten des verformten oder beschädigten Objektes werden von der Recheneinheit ausgewertet, um den Ort und/oder die Größe einer Verformung oder Beschädigung zu bestimmen. Dabei können die eingegebenen Bilddaten optional auch unter Zuhilfenahme ergänzender eingegebener Informationen, wie zum Beispiel eines Kfz-Typs, Referenzdaten zugeordnet werden oder mit Referenzdaten verglichen werden, um so den oder die Orte und/oder die Größe der jeweiligen Verformung oder Beschädigung zu ermitteln.

Vorzugsweise kann von der Recheneinheit, auf welcher ein wie oben beschriebenes Verfahren ausgeführt wird, auch ermittelt werden, welchem wirtschaftlichen Schaden eine so ermittelte Verformung oder Beschädigung entspricht.

Weiterhin bezieht sich die Erfindung auf ein System mit einer wie oben beschriebenen Vorrichtung zur Bestimmung der Veränderung der Form eines dreidimensionalen Objektes und einem Datenaufnahmegerät, wie zum Beispiel einer analogen oder digitalen Kamera oder einem mobilen Telefon, welches mit einer Kamera verbunden ist oder eine integrierte Kamera aufweist.

Die Erfindung wird nachfolgend anhand bevorzugter Ausführungsbeispiele beschrieben. Es zeigen:
- Figur 1: eine Ausfükungsform eines erfindungsgemäßen Systems zum Bestimmen der Formveränderung oder Schadenshöhe; und
- Figur 2: ein Ablaufdiagramm eines Veifahrensbeispiels zum Bestimmen der Schäden an einem Kfz und zum Bestimmen der Schadenshöhe.

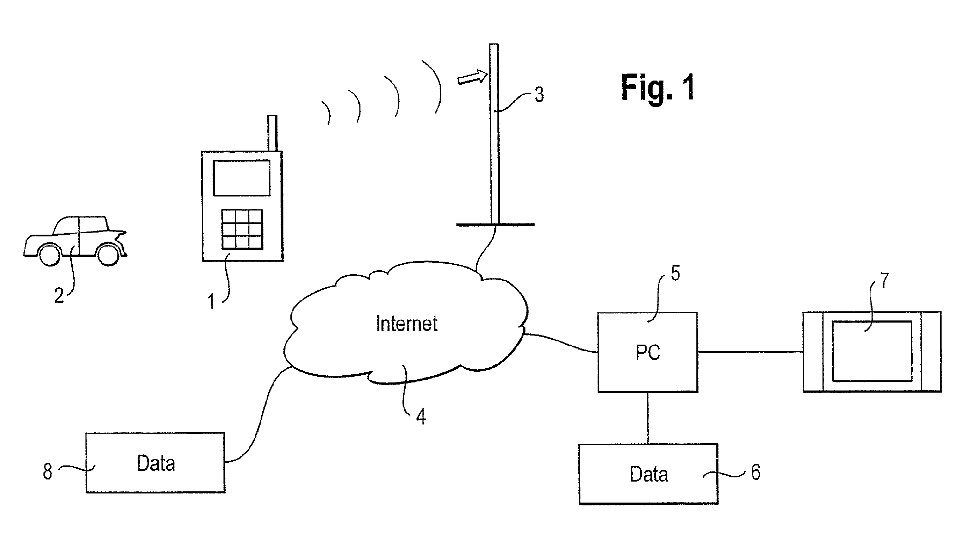

Figur 1 zeigt ein Mobiltelefon 1 mit integrierter Kamera, mit welcher ein Schaden an einem Kraftfahrzeug 2 aus unterschiedlichen Blickrichtungen auf das Kraftfahrzeug 2 aufgenommen wurde. Die mit der Kamera des Mobiltelefons 1 erzeugten Bilddaten werden als MMS zu einer Empfangsstation 3 eines Mobilfunknetzes übertragen, welche eine Verbindung zu dem Internet 4 hat. Mit dem Internet 4 ist eine Recheneinheit 5 verbunden, an welcher ein Bildschirm 7 und eine Datenbank 6 angeschlossen sind. Aus den über das Internet 4 zu der Recheneinheit 5 übermittelten Bilddaten des Unfallfahrzeuges 2 ermittelt die Recheneinheit 5 automatisch den Typ des Fahrzeuges 2 und ruft in der Datenbank 6 die Modelldaten zur Form des Kraftfahrzeuges 2 in unbeschädigtem Zustand ab. Durch einen Vergleich der Daten aus der Datenbank 6 mit den Bildern des beschädigten Kraftfahrzeuges 2 ermittelt die Recheneinheit 5 den Ort und die Größe des Schadens an dem Kraftfahrzeug 2. Dieser Schadensort und die Größe des Schadens wird verwendet, um anhand mehrerer in der Datenbank 6 gespeicherten Referenz-Schäden zu ermitteln welche Teile des Kraftfahrzeuges 2 defekt sind und ausgebessert oder ersetzt werden müssen. Nachdem die Teile und durchzuführenden Arbeiten von der Recheneinheit 5 ermittelt wurden, wird eine Anfrage über das Internet 4 an eine Datenbank 8, welche zum Beispiel von einer Kfz-Reparaturwerkstatte oder einem Automobilteüezuliefezer zur Verfügung gestellt wird, gesandt, um abzufragen, wie teuer die Ersatzteile und/oder durchzuführenden Reparaturarbeiten sind. Nachdem diese Daten von der Datenbank 8 über das Internet 4 zurück an die Recheneinheit 5 übersandt wurden, kann von der Recheneinheit 5 der Schaden an dem Kraftfahrzeug 2 berechnet und auf einem Bildschirm 7 oder über das Internet 4 zum Beispiel zusammen mit den Schadensbildern des Kraftfahrzeuges 2 an eine Versicherung, das Mobiltelefon 1, oder einen (online-)Markt für Kraftfahrzeuge oder Unfallwägen übertragen werden.

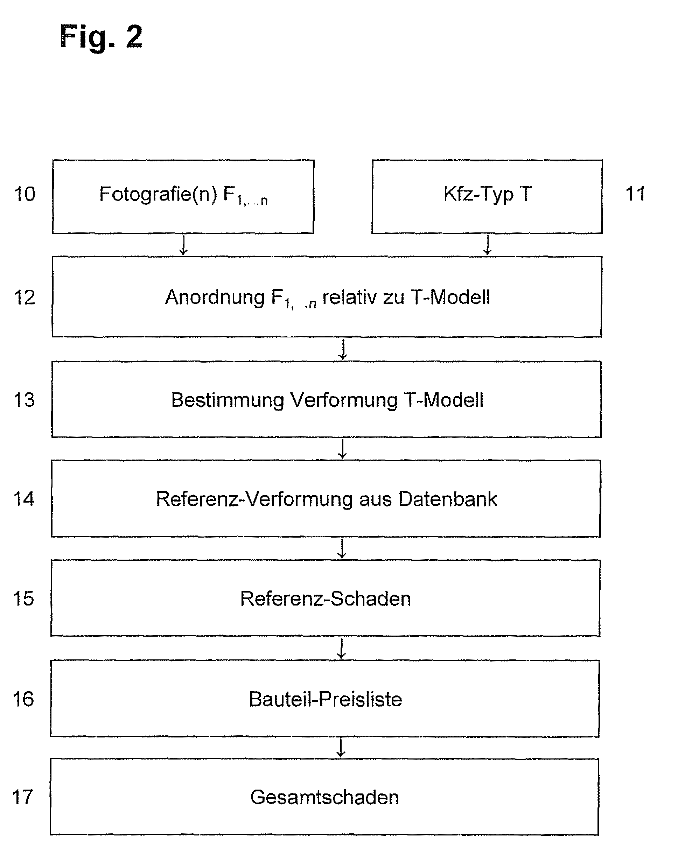

Figur 2 zeigt ein Ablaufdiagramm zur Erläuterung einer Ausführungsform eines erfindungsgemäßen Verfahrens, wobei die mit einer zum Beispiel in dem Handy 1 integrierten Kamera erzeugten Aufnahmen von dem beschädigten Kraftfahrzeug 2 als Fotografien F_{1, n} bezeichnet werden. Diese Fotografien F_{1, n} werden zusammen mit dem von einem Benutzer eingegebenen Kraftfahrzeug-Typ T als Eingaben 10 und 11 in eine Recheneinheit 5 eingegeben. In der Recheneinheit 5 wird im Verfahrensschritt 12 die Anordnung der Fotografien F_{1, n} relativ zu den Modelldaten eines beschädigten oder unbeschädigten Referenzmodells T angeordnet, um im Schritt 13 aus den verschiedenen Ansichten der Fotografien F_{1, n} die Verformung oder Beschädigung des Kraftfahrzeuges 2 zum Beispiel in Relation zu einem beschädigten oder unbeschädigten Referenzmodell T zu bestimmen.

Wird durch einen Vergleich mit mehreren Referenz-Schadensmodellen oder durch eine Berechnung anhand von Rückprojektionen der Fotografien F_{1,..n} festgestellt, dass eine bestimmte Referenz-Verformung vorliegt, so kann in Schritt 14 festgestellt werden, dass eine bestimmte oder konkrete Referenz-Verformung vorliegt, wobei aus der Datenbank 6 ein zu dieser Referenz-Verformung gehörender Referenz-Schaden in Schritt 15 in die Recheneinheit 5 geladen werden kann. Der Referenz-Schaden kann zum Beispiel angeben, dass ein geschätzter Schaden mit einer quantifizierbaren Größe an der Karosserie vorliegt und dass zusätzlich noch bestimmte Ersatzteile ausgebessert oder ersetzt werden müssen.

In Schritt 16 kann die zur Berechnung des Gesamtschadens in Schritt 17 noch notwendige Information bezüglich der aktuellen Preise der auszuwechselnden oder nachzubessernden Bauteile zum Beispiel aus einer Datenbank 8 geholt werden, um die Höhe des Gesamtschadens 17 in der Recheneinheit 5 ermitteln zu können.

## Patentansprüche

1. Verfahren zum Bestimmen der Veränderung der Form eines dreidimensionalen Objektes (2) aus mindestens einer zweidimensionalen Abbildung des Objektes (2), wobei die ursprüngliche dreidimensionale Form des Objektes (2) als dreidimensionale Modellform bekannt ist oder aus der mindestens einen zweidimensionalen Abbildung des Objektes (2) ermittelt wird und die dreidimensionale Modellform so gedreht wird, dass mindestens eine zweidimensionale Abbildung oder Projektion der dreidimensionalen Modellform zumindest mit einem Teilbereich oder einer Kontur der mindestens einen zweidimensionalen Abbildung des Objektes (2) übereinstimmt oder dieser ähnelt und wobei ermittelt wird, in welchem Bereich oder welchen Bereichen die mindestens eine zweidimensionale Abbildung des Objektes (2) von der oder den zweidimensionalen Projektion(en) der dreidimensionalen Modellform abweicht, wobei der oder die abweichenden zweidimensionalen Bereiche als formveränderte Bereiche identifiziert werden und nach einer Rückprojektion des oder der formveränderten Bereiche auf die dreidimensionale Modellforrn die dreidimensionale Formveränderung des dreidimensionalen Objektes ermittelt wird.

2. Verfahren zum Bestimmen der Veränderung der Form eines dreidimensionalen Objektes (2) aus mindestens einer zweidimensionalen Abbildung des Objektes (2), wobei durch einen Vergleich der mindestens einen zweidimensionalen Abbildung des Objekts (2) mit einer oder mehreren Objekten mit Referenzverformungen ermittelt wird, ob eine oder mehrere dieser Referenzverformungen vorliegen.

3. Verfahren zum Bestimmen der Veränderung der Form eines dreidimensionalen Objektes (2) nach Anspruch 1 oder 2, wobei das Objekt ein Kraftfahrzeug oder ein Kraftfahrzeugteil ist.

4. Verfahren nach einem der vorhergehenden Ansprüche, wobei ein oder mehrere dreidimensionale unverformte und/oder eine oder mehrere Referenzverformungen aufweisende Modellformen als Referenzformen für das dreidimensionale Objekt in einer Datenbank gespeichert sind.

5. Verfahren nach einem der vorhergehenden Ansprüche, wobei ein Matching-Verfahren zur Bestimmung der Ähnlichkeit oder zur Bestimmung von Ähnlichkeitsbereichen zwischen der zweidimensionalen Abbildung des verformten dreidimensionalen Objektes und einer zweidimensionalen Projektion einer dreidimensionalen Modellform verwendet wird.

6. Verfahren nach einem der vorhergehenden Ansprüche, wobei anhand des Lichteinfalls und/oder Schattens auf der zweidimensionalen Abbildung des Objektes (2) der Ort und/oder die Größe oder Abmessungen einer oder mehrerer Verformungen an dem dreidimensionalen Objekt (2) ermittelt werden.

7. Verfahren nach einem der vorhergehenden Ansprüche, wobei die mindestens eine zweidimensionale Abbildung oder Aufnahme des Objektes (2) mittels einer Digitalkamera oder eines Mobiltelefons erzeugt wird.

8. Verfahren zum Bestimmen der Schadenshöhe eines Objektes, insbesondere eines Kraftfahrzeuges, wobei eine Formveränderung des Objektes nach einem Verfahren gemäß einem der vorhergehenden Ansprüche bestimmt wird und durch einen Vergleich mit mindestens einem bezüglich der Schadenshöhe bereits quantifizierten Referenz-Schaden und/oder anhand einer Klassifikation der Bereiche des Objektes bezüglich der Schadenshöhe im Falle eines in dem Bereich auftretenden Schadens ermittelt wird, wie hoch der Schaden des Objektes ist.

9. Verfahren nach dem vorhergehenden Anspruch, wobei anhand der Bestimmung der Formveränderung ermittelt wird, welche Ersatzteile des Objektes oder Kraftfahrzeuges ausgebessert oder ersetzt werden müssen und/oder wie lange Reparaturarbeiten dauern.

10. Verfahren nach dem vorhergehenden Anspruch, wobei aus einer Datenbank (8) die aktuelle Preisinformation für Ersatzteile zur Berechnung des Objekt- oder Kfz-Schadens ermittelt wird.

11. Computerprogramm, welches, wenn es in einen Computer geladen wird oder auf einem Computer läuft, ein Verfahren nach einem der vorhergehenden Ansprüche ausführt.

12. Programmspeichermedium oder Computerprogrammprodukt mit einem Programm nach dem vorhergehenden Anspruch.

13. Vorrichtung zum Bestimmen der Veränderung der Form eines dreidimensionalen Objektes (2) mit
a) einer Datenbank (6), in welcher ein oder mehrere der folgenden Daten abgespeichert sind: Referenzdaten von dreidimensionalen Formen einer Objektklasse, wie zum Beispiel eines Automobiltyps, als Modellform; Daten, welche Bereiche der jeweils abgespeicherten dreidimensionalen Modellformen bezüglich der zu bewertenden Schadenshöhe in einem solchen Bereich klassifizieren; Referenz-Schäden für die jeweils abgespeicherten dreidimensionalen Modellformen, welche Beschädigungen unterschiedlicher Größe oder Intensität an unterschiedlichen Objektbereichen aufweisen und welche miteinander kombiniert und mit einer Aufnahme eines beschädigten Objektes verglichen werden können; und Preislisten für Stundensätze und/oder Ersatzteile; und
b) einer Recheneinheit (5) welche mit der Datenbank (6) verbunden ist, in welche mindestens eine zweidimensionale Abbildung oder Fotografie eines verformten oder beschädigten Objektes (2) eingegeben werden kann, wobei die eingegebenen Bilddaten des verformten oder beschädigten Objektes (2) von der Recheneinheit (5) nach einem der Ansprüche 1 bis 7 ausgewertet werden können, um den Ort und/oder die Größe einer Verformung oder Beschädigung zu bestimmen und wobei den eingegebenen Bilddaten unter Zuhilfenahme ergänzender eingegebener Informationen, insbesondere eines Kfz-Typs, Referenzdaten zugeordnet werden oder diese mit Referenzdaten verglichen werden, um so den oder die Orte und/oder die Größe der jeweiligen Verformung oder Beschädigung zu ermitteln.

14. Vorrichtung nach dem vorhergehenden Anspruch, wobei die Recheneinheit (5) mit einem Verfahren nach einem der Ansprüche 8 bis 10 ermitteln kann, welchem wirtschaftlichen Schaden eine ermittelte Verformung oder Beschädigung entspricht.

15. System mit einer Vorrichtung nach einem der zwei vorhergehenden Ansprüche und einer Datenaufnahmeeinheit (1), insbesondere einem Mobiltelefon oder einer Kamera.
